# EUROPÄISCHE PATENTSCHRIFT

(11) **EP 1 997 986 B1**
(45) Veröffentlichungstag und Bekanntmachung des Hinweises auf die Patenterteilung: **08.06.2011**
(21) Anmeldenummer: 08152303.7
(22) Anmeldetag: 05.03.2008
(51) Int. Cl.: E05C 9/02, E05B 65/10, E05B 9/00, E05B 45/06, E05B 47/00

(54) **Schloss, insbesondere Panikschloss mit Nussbetätigungsstellungssensor**
Lock, in particular panic lock with nut actuation positioning sensor
Serrure, en particulier serrure anti-panique dotée d'un capteur de position à actionnement au pied

(30) Priorität: 16.03.2007 DE 202007003890 U
(43) Veröffentlichungstag der Anmeldung: 03.12.2008
(73) Patentinhaber: Carl Fuhr GmbH & Co. KG, 42579 Heiligenhaus (DE)
(72) Erfinder: Tönges, Reiner, 42579 Heiligenhaus (DE)
(74) Vertreter: Grundmann, Dirk

(56) Entgegenhaltungen:
- WO-A-01/94726
- WO-A-2004/109236
- DE-A1- 10 147 253
- DE-A1- 10 361 774
- DE-A1- 19 831 671
- DE-U1- 29 803 634

## Beschreibung

Die Erfindung betrifft ein Schloss mit einer in einem Schlossgehäuse gelagerten und durch Drehen einer Drückernuss von einer Vortrittsstellung vor einem die Brustschmalseite des Schlossgehäuses bildenden Stulp in eine Rückzugsstellung zurückziehbaren Falle und einem elektrischen Sensorelement, welches bei einem derartigen Fallenrückzug seinen elektrischen Zustand ändert, wobei das Schlossgehäuse an seiner im eingebauten Zustand nach oben weisenden oberen Schmalseite zwischen Stulp und einer diesem gegenüberliegenden rückwärtigen Schmalseite eine Ausbuchtung aufweist.

Ein derartiges Schloss ist auf dem Markt bekannt. Mit dem Sensorelement, das dort von einem Taster gebildet wird, wird die Nussstellung abgefragt, um eine Fernüberwachung bspw. durch eine Einbruchmeldeanlage durchführen zu können. Der Taster sitzt mittig im Gehäuse und ist dort mit dem Gehäuseboden verschraubt. Am Gehäuserand befindet sich eine Platine, die mit einem im Schlosskasten verlegten Kabel mit dem Taster verbunden ist. Auf der Platine ist eine Steckerbuchse angeordnet, in die ein Stecker mit einem Kabel eingesteckt werden kann.

Aus der DE 198 31 671 A1 ist ein Schloss vorbekannt. Dieses Schloss ist ein Treibstangenverschluss mit Panikfunktion. Das vorbekannte Schloss besitzt eine Falle, die einen Kopf und einen im Schlosskasten geführten Fallenschwanz aufweist. Ein Arm eines Drückers greift am Fallenschwanz an, um die Falle zurückzuziehen. Der Drückerarm greift darüber hinaus an einem Treibstangenrückzugshebel an, der mit seinem anderen Arm in eine Aussparung einer Treibstange eingreift. Wird der Fallenrückzugshebel durch Drehen der Drückernuss verschwenkt, wird die Treibstange zurückverlagert. Dies geht mit einer Rückverlagerung von Riegelgliedern einher.

Der Erfindung liegt die Aufgabe zugrunde, ein gattungsgemäßes Schloss herstellungstechnisch zu vereinfachen.

Gelöst wird die Aufgabe durch die in den Ansprüchen angegebene Erfindung, wobei jeder Anspruch eine eigenständige Lösung der Aufgabe darstellt.

Zunächst und im Wesentlichen ist vorgesehen, dass das Sensorelement rückwärtig der Aussparung und oberhalb der Drückernuss angeordnet ist. Das Sensorelement ist bevorzugt im Eckbereich von oberer Schmalseite und rückwärtiger Schmalseite des Schlosses angeordnet. Die obere Schmalseite des Schlosses kann sich aus einer vorderen Schmalseite und einer rückwärtigen Schmalseite zusammensetzen, die durch die Aussparung voneinander getrennt sind. Die Aussparung bildet eine Durchtrittsöffnung zum Durchtritt einer Beschlagsschildbefestigungsschraube, um auf den Türblättern angeordnete Beschlagsschilder aneinander zu befestigen. Da die Ausbuchtung einseitig offen ist, kann das Schloss um diese Befestigungsschrauben beim Einstecken um eine eingefräste Tasche in einer Tür gehakt werden. Der rückwärtige Teil der oberen Schmalseite wird von einem Fortsatz des Gehäuses gebildet. Dieser Fortsatz kann von einem Gehäusemodul ausgebildet sein, welches Gehäusemodul Träger einer Platine ist. Auf dieser Platine können sowohl Taster als auch Anschlusselement für ein Kabel angeordnet sein. Auch das erfindungsgemäße Schloss ist vorzugsweise ein Treibstangenschloss mit Panikfunktion. Das Sensorelement, bei dem es sich vorzugsweise um einen Taster handelt, kann mit einer Tastfahne einen Schaltnocken eines Hebels abtasten. Dieser Hebel wird beim Drehen der Drückernuss geschwenkt. Vorzugsweise wird der Hebel gegen die Rückstellkraft einer Feder geschwenkt. Der Hebel kann ein Riegel- oder Treibstangenrückzugshebel sein. Er kann die gleiche Funktion und die gleiche Gestalt besitzen, wie der Treibstangenrückzugshebel, der von der DE 198 31671 A1 beschrieben wird. Auch das übrige Schlosseingerichte des erfindungsgemäßen Schlosses kann demjenigen entsprechen, wie es die DE 198 31 671 A1 beschreibt, weshalb diese Druckschrift vollinhaltlich mit in den Offenbarungsgehalt dieser Anmeldung einbezogen wird. Die oben genannte Platine kann in einer Aufnahmekammer des Gehäusemoduls einliegen. Diese Aufnahmekammer kann mit einem separaten Deckel verschlossen sein. Die Aufnahmekammer kann darüber hinaus auch einen Lagerzapfen abdecken, an dem ein Hebel, vorzugsweise ein Riegel- oder Treibstangenrückzugshebel gelagert ist. Die Befestigung des Deckels des Gehäusemoduls erfolgt bevorzugt mit ein oder mehreren Befestigungsschrauben, die durch entsprechende Schraubendurchtrittsöffnungen des Deckels hindurchgeschraubt werden können. Dabei durchgreifen diese Schrauben gleichzeitig Durchtrittsöffnungen des Sensorelementes bzw. des Tasters. Sie werden dann in gehäusefeste Einschraubgewinde eingeschraubt, so dass mittelst der Schrauben nicht nur der Deckel, sondern auch das Elektronikelement bestehend aus Platine, Taster und Anschlusselement im Schlossgehäuse befestigt ist. Wird der Hebel, bei dem es sich bevorzugt um einen Riegel-oder Treibstangenrückzugshebel handelt, von einer Feder, bspw. einer Drehschenkelfeder abgefedert, so verlagert sich dieser Hebel, nachdem die Drückernuss losgelassen worden ist, selbsttätig in die Ausgangsposition. Wird die Drückernuss losgelassen, so wird die Tastfahne des Tasters somit wieder vom Schaltnocken beaufschlagt. In einer Variante der Erfindung ist aber vorgesehen, dass dieser Hebel, bei dem es sich insbesondere um einen Riegel- oder Treibstangenrückzugshebel handelt, eine Speicherfunktion erfüllt. Wird dieser Hebel durch Drückerbetätigung zunächst verlagert, ändert der Taster seine elektrischen Eigenschaften. Der Hebel wird aber nicht gegen die Rückstellkraft einer Feder verlagert. Gleichwohl wird bei seiner Verlagerung aber auch der Treibstangenanschlussschieber, an dem der Arm des Hebels angreift, rückverlagert, so dass das gesamte Schloss entriegelt wird. Wegen der fehlenden Rückdrückfeder bleibt der Hebel in der verschwenkten Situation, auch wenn der Drücker losgelassen wird und die Drückernuss sich zufolge ihrer Federkraftbeaufschlagung zurückdreht. Der Treibstangenrückzugshebel wird erst dann wieder in eine Position zurückverlagert, in der der Schaltnocken auf die Tastfahne des Tasters wirkt, wenn das Schloss erneut verriegelt wird. Um die Schenkelfeder zur Verwirklichung der Speicherfunktion des Hebels außer Wirkung zu bringen, ist ein Sperrelement vorgesehen. Dieses wird in das Schlossgehäuse und insbesondere in das Gehäusemodul eingesetzt. Es liegt im Schwenkbewegungsraum des Armes der Schenkelfeder, die am Hebel angreift. Dieser Arm der Schenkelfeder kann vor dieses Sperrelement gelegt werden, so dass es passiviert ist. Am Hebel greift somit in der entscheidenden Phase, bevor der Schaltnocken den Taster erreicht, keine Federkraft an, so dass der Hebel nur durch Verlagerung des Treibstangenanschlussschiebers in die Kontaktstellung mit dem Taster gebracht werden kann. Hierzu ist die Betätigung eines Schließzylinders erforderlich. Der Schließzylinder besitzt ein Schließglied, welches in einen Spalt eines Zahnkranzes der Schließzylindereinsetzöffnung eingreift. Der Zahnkranz wirkt mit einem Untersetzungsgetriebe zusammen, dessen Letztrad in Verzahnungen der beiden Treibstangen eingreift. Durch Drehen des Schließzylinders werden demzufolge die Treibstangen von einer Entriegelungsstellung in eine Verriegelungsstellung verlagert. Einhergehend damit wird der sich auf einer Stufe eines Treibstangenanschlussschiebers abstützende Treibstangenrückzugshebel wieder in die Ausgangsstellung verlagert, in welcher der Schaltnocken die Tastfahne beaufschlagt. Einhergehend mit dieser Verlagerung der Treibstange in die Verriegelungsstellung werden von der Treibstange angetriebene Zusatzschlösser in eine Verriegelungsstellung gebracht. Die Zusatzschlösser können Rollzapfen aufweisen oder Schwenkriegel besitzen. Sie können aber auch Schubriegel aufweisen. Das Hauptschloss besitzt ebenfalls einen Schubriegel, der im Zuge der Treibstangenvorverlagerung ausfährt und welcher bei der Drückerbetätigung wieder zurückgezogen wird. In einer Weiterbildung der Erfindung ist vorgesehen, dass die Drückernuss zweigeteilt ist. Die Drückernuss besitzt zwei axial übereinander angeordnete Teilnüsse. Nur eine der beiden Teilnüsse wirkt mit dem Rückzugshebel zusammen. Die andere Nusshälfte wirkt lediglich mit einem Mitnahmevorsprung des Fallenschwanzes zusammen. Diese, bevorzugt mit einem Außendrücker zusammenwirkende Drückernuss ist somit lediglich in der Lage, die Falle zurückzuziehen. Ist das Schloss verriegelt, kann mit dem Außendrücker das Schloss nicht geöffnet werden. Der Innendrücker ist mit der anderen Nusshälfte verbunden. Deren Nussarm greift nicht nur am Mitnahmevorsprung des Fallenschwanzes, sondern auch am Rückzugshebel an, so dass beim Drehen der mit der Innenhandhabe verbundenen Drückernuss nicht nur die Falle, sondern auch sämtliche Riegelglieder zurückgezogen werden, einhergehend mit einem Auslösen des Tasters.

Ausführungsbeispiele der Erfindung werden nachfolgend anhand beigefügter Zeichnungen erläutert. Es zeigen:
Fig. 1 eine Draufsicht auf ein erfindungsgemäßes Schloss mit abgenommenem Schlossdeckel in der Grundstellung,
Fig. 2 eine Folgedarstellung zu Fig. 1, nachdem der Drücker um etwa 13° geschwenkt worden ist,
Fig. 3 eine Folgedarstellung zu Fig. 2, nachdem der Drücker um etwa 35,5° geschwenkt worden ist,
Fig. 4 eine Folgedarstellung zu Fig. 3, nachdem der Drücker losgelassen worden ist,
Fig. 5 ein zweites Ausführungsbeispiel der Erfindung, bei dem am Treibstangenrückzugshebel keine Rückstellfeder angreift, in der Grundstellung,
Fig. 6 eine Folgedarstellung zu Fig. 5 mit um 35,5° verschwenktem Drücker,
Fig. 7 eine Folgedarstellung zu Fig. 6 nach losgelassenem Drücker,
Fig. 8 einen vergrößerten Ausschnitt des das Elektronikmodul und den Treibstangenrückzugshebel aufweisenden Gehäusemoduls, wobei die Nuss zweigeteilt ist und die mit einem Außendrücker verbindbare Nusshälfte verschwenkt ist,
Fig. 9 eine Darstellung gemäß Fig. 8, wobei die mit einem Innendrücker verbindbare Nuss zurückgeschwenkt ist,
Fig. 10 einen Schnitt durch eine zweigeteilte Drückernuss,
Fig. 11 eine perspektivische Darstellung des bestückten Gehäusemoduls ohne Deckel,
Fig. 12 eine Explosionsdarstellung der Elemente des Gehäusemoduls und
Fig. 13 eine Darstellung gemäß Fig. 11 mit blockierter Schenkelfeder.

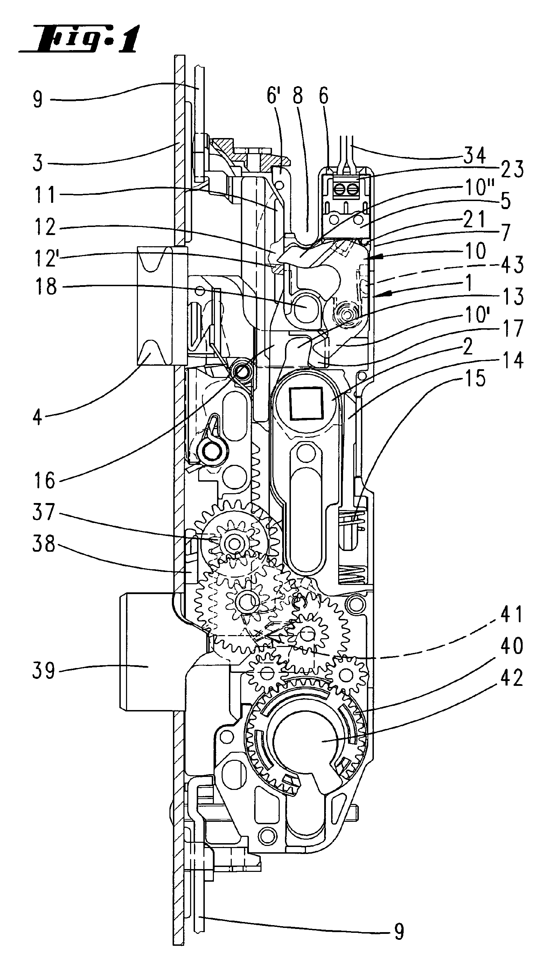

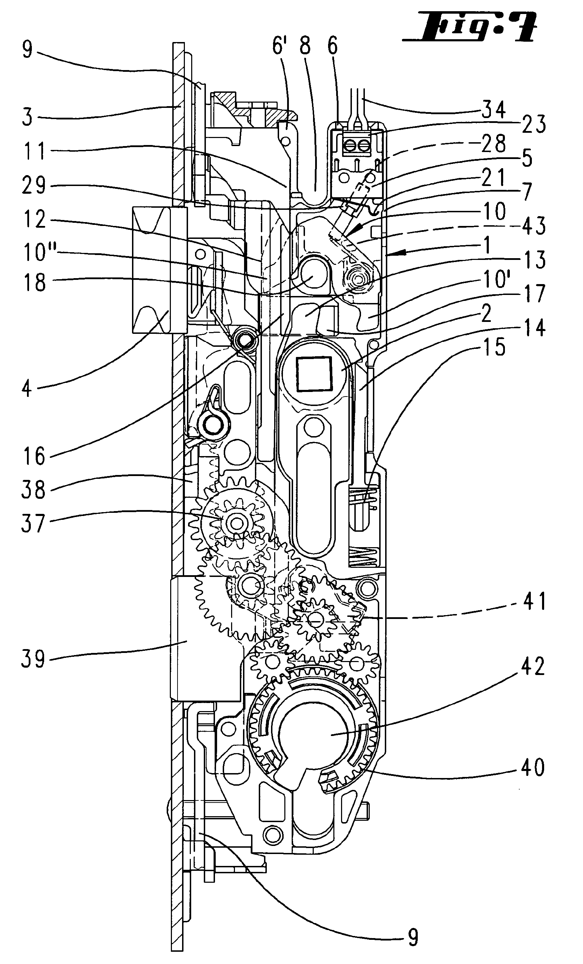

Das Schloss, welches in den Figuren 1 - 7 in den verschiedenen Betriebsstellungen dargestellt ist, besitzt einen Schlossboden und auf dem Schlossboden und eine nicht dargestellte Schlossdecke. Zwischen Schlossboden und Schlossdecke, die die wesentlichen Elemente des Gehäuses 1 sind, befindet sich das in den Figuren sichtbare Schlosseingerichte, wobei auch hier nur die wesentlichen Elemente des Schlosseingerichtes dargestellt sind.

Rückwärtig eines Stulps 3 befinden sich zwei gegenläufig verschiebbare Treibstangenanschlussschieber 11, 38, die in einem Endabschnitt jeweils aufeinander zuweisende Verzahnungen aufweisen. In diese Verzahnungen der beiden Treibstangenanschlussschieber 11, 38 greift die Verzahnung eines Letztrades 37 eines Zahnraduntersetzungsgetriebes ein. Das Zahnraduntersetzungsgetriebe wird von einem Zahnkranz 40 drehangetrieben, in welchem sich ein nicht dargestellter Schließzylinder befindet. In den Schlitz des Zahnkranzes 40 greift das Schließglied des Schließzylinders ein. Der Zahnkranz 40 und Teile des Untersetzungsgetriebes sind einem Gehäusemodul zugeordnet. Dieses Gehäusemodul trägt auch einen Schubriegel 39, der durch ein Fenster des Stulps 3 vor- und zurückgeschlossen werden kann. Der Riegel 39 wird von einem Schwenkhebel 41 angetrieben, der in eine Tasche des Riegelschwanzes eingreift. Der Schwenkhebel besitzt eine Verzahnung, und wird entweder von einem Treibstangenanschlussschieber 11 oder von einem Zahnrad drehangetrieben, wenn der Schließzylinder den Drehkranz 40 verdreht. Es besteht zusätzlich eine Bewegungskopplung zum Treibstangenanschlussschieber 11. Wird dieser verlagert, so wird dessen Bewegung auf den Schwenkhebel 41 übertragen.

An den beiden Enden der Treibstangenanschlussschieber 11, 38 sind Treibstangen 9 befestigt, mit denen Zusatzschlösser betätigt werden können.

Oberhalb der Eingriffsöffnung 42 für den Profilschließzylinder befindet sich ein Drückernussgehäusemodul, welches eine Drückernuss 2 lagert. Die Drückernuss besitzt einen Federangriffsarm, an dem ein Federschieber 14 angreift, der von einer Druckfeder 15 beaufschlagt wird und welcher die Nuss in ihrer Ausgangsstellung hält. Der Nussarm 13, welcher nach oben weist, greift zum einen an einen Mitnahmevorsprung 17 eines Fallenschwanzes 16 einer Falle 4 an. Die Falle 4 besitzt darüber hinaus auch einen Fallenkopf, der in der Ausgangsstellung vor dem Stulp 3 liegt. Die Falle wird mittelst einer Fallenfeder in dieser Stellung gehalten. Das Schloss entspricht im Wesentlichen dem Schloss, wie es in der DE 198 31 671 A1 beschrieben ist.

So ist bspw. die Möglichkeit gegeben, die Falle nicht nur durch Drehen der Drückernuss 2 zurückzuziehen. Es ist auch möglich, nach vorherigem Zurückziehen der Riegelglieder und insbesondere des Schubriegels 39 vermittelst einer Wechselbetätigung die Falle 4 zurückzuziehen.

Der obere Treibstangenanschlussschieber 11 bildet eine Aussparung 12 aus. In diese Aussparung 12 ragt ein Arm 10" eines Riegelrückzugshebels 10. Der Riegelrückzugshebel ist um eine Drehachse 19 fest am Gehäuse bzw. am Gehäusemodul 25 drehgelagert. Ein kürzerer Hebelarm 10' liegt im Schwenkbereich des Nussarmes 13. Wird die Nuss 2 gedreht, wird somit nicht nur die Falle 4 zurückgezogen. Es wird auch der Rückzugshebel 10 verschwenkt. Der Rückzugshebel 10 bewirkt zufolge seines Eingriffs in die Aussparung 12 eine Mitnahme des Treibstangenanschlussschiebers 11 von seiner Verriegelungsstellung in seine Entriegelungsstellung. Wegen der oben bereits erwähnten Bewegungskopplung der beiden Treibstangen und des Schubriegels 39 hat das Verschwenken des Rückzugshebels 10 eine Entriegelung des gesamten Schlosses zur Folge. Die Drückerbetätigung führt somit in jedem Falle zu einer Öffnungsmöglichkeit der Tür, womit eine Panikfunktion verwirklicht ist.

Wird der Drücker wieder losgelassen, so sorgt bei dem in den Figuren 1 - 4 dargestellten Ausführungsbeispiel eine weiter unten noch zu erörternde Schenkelfeder 20 für ein Rückverschwenken des Rückzugshebels 10, der auch einen Treibstangenrückzugshebel ausbildet.

Die Aussparung 12 bildet eine Stufe 12', gegen welche der lange Arm 10" des Rückzugshebels 2 tritt, wenn er durch Beaufschlagung des kurzen Armes 10' durch den Nussarm 13 geschwenkt wird.

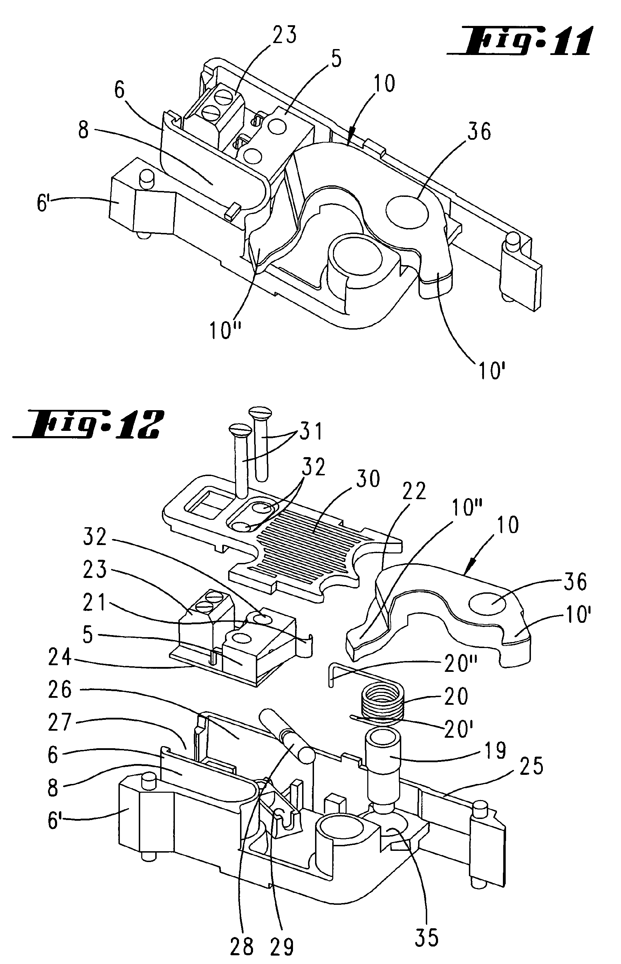

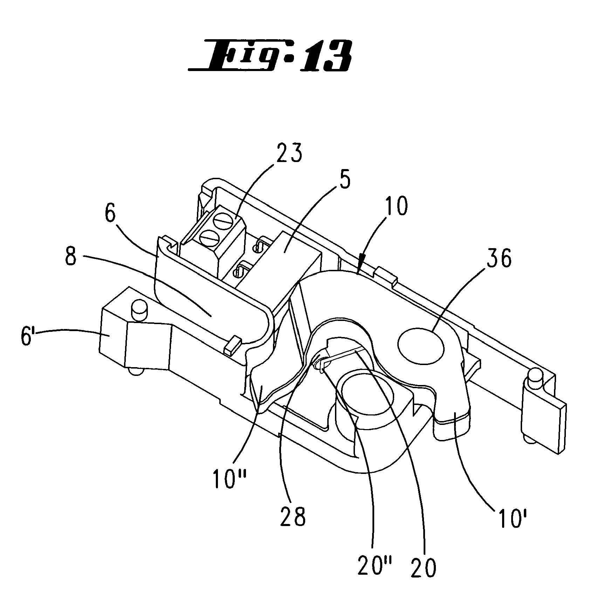

Den vergrößerten und perspektivischen Darstellungen der Figuren 11 -13 ist zu entnehmen, dass der Rückzugshebel 10, der im Ausführungsbeispiel ein Treibstangenrückzugshebel ist, einem Gehäusemodul 25 zugeordnet ist. Das Gehäusemodul 25 kann als Metallspritzgussteil gefertigt sein. Es bildet eine Lagerzapfeneinstecköffnung 35 aus, in welcher ein Lagerzapfen 19 einsteckt, der ein Drehlager bildet, einerseits für den bereits erwähnten Treibstangenrückzugshebel 10 und andererseits für eine Schenkelfeder 20, deren erster Arm 20' gehäusefest gelagert ist und deren zweiter Arm 20" am Treibstangenrückzugshebel 10 angreift. Hierzu besitzt der Hebel 10 einen Vorsprung 43. Wird der Treibstangenrückzugshebel 10 vom Nussarm 13 an seinem Arm 10' beaufschlagt, so dreht er sich in den Darstellungen entgegen dem Uhrzeigersinn, wobei die Schenkelfeder 20 gespannt wird. Dreht der Nussarm 13 zurück in seine Ausgangsstellung, wie sie in der Fig. 1 dargestellt ist, so wird der Treibstangenrückzugshebel 10 durch die Federkraft wieder zurückverschwenkt.

Die obere Schmalseite des Schlossgehäuses 1 besteht aus einem ersten Abschnitt 6', der Befestigungselemente aufweist, mit denen das Schlossgehäuse an einer Stulpschiene 3 befestigt ist. Dieser erste Abschnitt 6' der oberen Schmalseite endet an einer Ausbuchtung 8, die sich ausgehend von der oberen Schmalseite parallel zu Stulp 3 verlaufend schlosseinwärts erstreckt, und die eine Durchtrittsöffnung für eine Beschlagschildbefestigungsschraube ausbildet. Das Schloss kann in eine entsprechend ausgefräste Tasche einer Tür eingesteckt werden. Eine Beschlagschildbefestigungsschraube wird dann durch diese Ausbuchtung 8 gesteckt.

Rückwärtig der Ausbuchtung 8 befindet sich ein Gehäusefortsatz, der von dem bereits erwähnten Gehäusemodul 25 gebildet wird. Die obere Randkante 6 des Gehäusemoduls 25 bildet einen weiteren Abschnitt der oberen Schmalseite 6' des Gehäuses. In diesem Bereich ist die Schmalseite mit einer Gehäuseöffnung 27 versehen, welcher sich eine Aufnahmekammer 26 anschließt. In dieser Aufnahmekammer 26 liegt ein Elektronikmodul ein, welches aus einer Platine 24 besteht, die sowohl einen Taster 5 als auch ein Anschlusselement 23 trägt. Das Anschlusselement 23, bei dem es sich im Ausführungsbeispiel um Klemmen handelt, sitzt unmittelbar rückwärtig der Gehäuseaussparung 27, so dass Kabel 34 in einfacher Weise mit dem Anschlusselement 23 verbunden werden können. Die Rückwand des Gehäusemoduls 25 bildet eine Verlängerung der rückwärtigen Gehäuseschmalseite 7 aus.

Der Taster 5 besitzt eine Tastfahne 21. Wird diese Tastfahne verschwenkt, so ändert der Taster seinen elektrischen Zustand von leitend auf nicht leitend bzw. umgekehrt. Die Tastfahne 21 wirkt mit einem Schaltnocken 22 des Rückzughebels 10 zusammen. Der lange Arm 10" des Rückzugshebels 10 besitzt eine Knieform, wobei der Schaltnocken 22 im Bereich des Knies angeordnet ist.

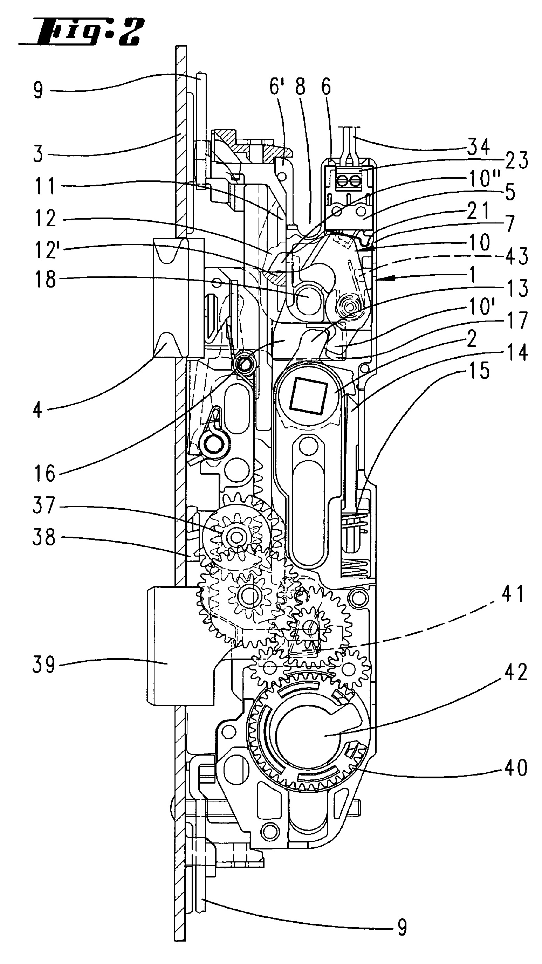

Der Schaltnocken 22 sitzt in einer nicht betätigten Nussstellung, wie sie in der Fig. 1 dargestellt ist vor dem Tastende der Tastfahne 21, so dass die Tastfahne 21 rückverlagert ist. Wird die Drückernuss ausgehend aus der in Fig. 1 dargestellten Stellung in die in Fig. 2 dargestellte Stellung um etwa 13° verlagert, so wird auch der Treibstangenrückzugshebel 10 um eine gewisses Maß verdreht. Dieses Maß reicht aus, dass der Schaltnocken 22 das Tastende der Tastfahne 21 verlässt mit dem Erfolg, dass der Taster 5 seinen elektrischen Zustand ändert. Beispielsweise kann der Taster von einem Zustand, in dem die beiden Anschlüsse elektrisch voneinander isoliert sind, in einen Zustand wechseln, in dem die beiden Anschlüsse miteinander leitend verbunden sind.

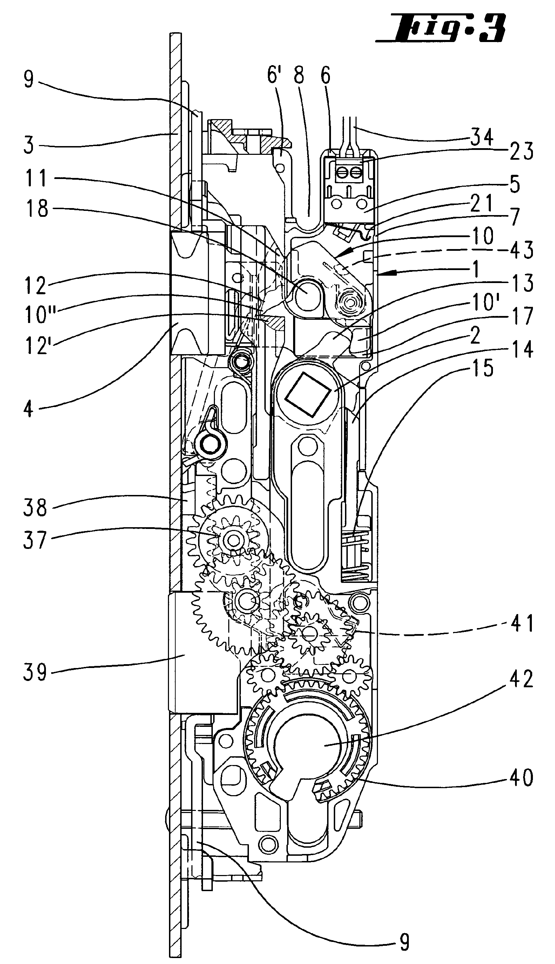

Einhergehend mit dem Verschwenken des Treibstangenrückzugshebels 10 wird auch die Falle 4 zurückgezogen, da der Nussarm 13 auch an dem bereits erwähnten Mitnahmevorsprung 17 angreift. Bei einer Weiterverlagerung bis in die in Fig. 3 dargestellte Stellung wird der Treibstangenrückzugshebel 10 weiter verschwenkt und wird die Falle 4 weiter zurückverlagert. Das Ende des Armes 10" beaufschlagt dabei die Stufe 12' der Aussparung 12 des Treibstangenanschlussschiebers 11. Die Kniehöhlung des Treibstangenrückzugshebels 10 legt sich dabei um die Wandung einer Durchtrittsöffnung 18 für eine weitere Beschlagschildbefestigungsschraube.

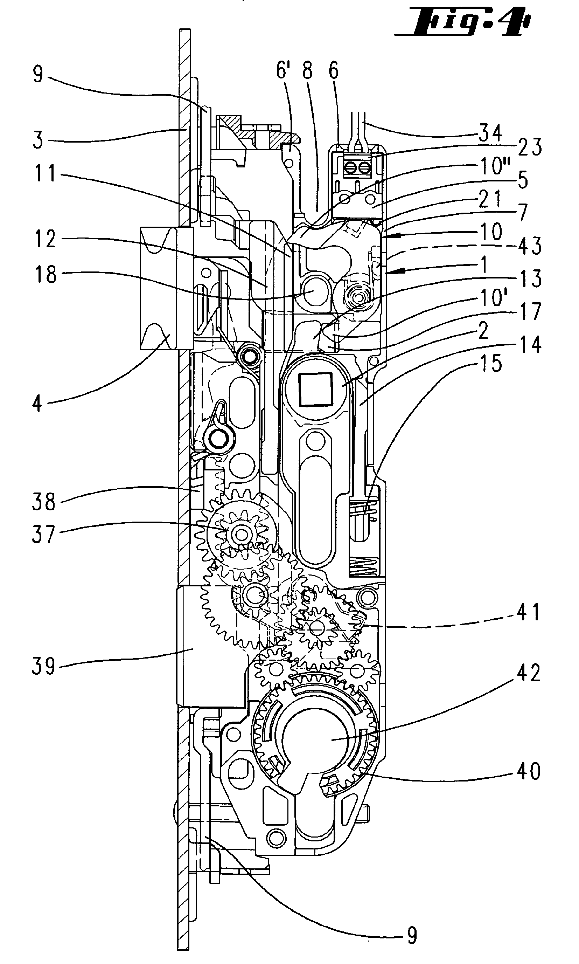

Beim ersten Ausführungsbeispiel führt das Loslassen des Drückers zu der in Fig. 4 dargestellten Betriebsstellung. Die Drückernuss 2 nimmt wieder ihre Ausgangsstellung ein. Dies erfolgt durch die Kraft der Druckfeder 15. Auch der Treibstangenrückzugshebel 10 wird wieder in die Ausgangsstellung zurückverschwenkt, so dass sein Schaltnocken 22 das Tastende der Tastfahne 21 beaufschlagt und der Taster 5 wieder seinen Ursprungszustand einnimmt. Dies erfolgt durch die Kraft der Schenkelfeder 20.

Die im Zuge der Abwärtsverlagerung des Treibstangenanschlussschiebers 11 zurückverlagerten Riegelglieder 39 verbleiben aber in der rückverlagerten Stellung.

Wie weiter aus den Figuren 11 -13 zu entnehmen ist, ist das das Elektronikmodul und den Treibstangenrückzugshebel 10 aufnehmende Gehäusemodul 25 mit einem eigenen Deckel 30 verschlossen. Hierzu sind zwei Befestigungsschrauben 31 vorgesehen, die durch Schraubendurchtrittsöffnungen 32 des Deckels 30 hindurchragen. Die Befestigungsschrauben 31 durchragen darüber hinaus auch Befestigungsöffnungen 32 des Tasters 5, so dass nicht nur der Deckel 30, sondern gleichzeitig damit auch das Elektronikmodul in Bezug auf das Gehäusemodul 25 fixiert werden kann. Das Elektronikmodul, also die Platine 24, die das Anschlusselement 23 und den Taster 5 trägt, liegt lediglich lose in der Aufnahmekammer 26 ein.

Teilweise unterhalb der Platine 24 befindet sich eine Halterung 29 für ein Sperrelement, welches als Sperrstift oder Sperrdorn 28 ausgebildet ist. Der Sperrdorn 28, der im Wesentlichen eine hantelförmige Gestalt aufweist, kann in die wannenförmige Halterung 29 eingelegt werden. Er ist dort von der über ihm liegenden Platine fixiert. Ein Stirnende des Sperrdornes 28 ragt in die Bewegungsbahn eines abgewinkelten Endes 20" der Schenkelfeder 20. Die Wirkung der Schenkelfeder 20 auf den Treibstangenrückzugshebel 10 kann dadurch inaktiviert werden, indem dieser Arm 20" vor die Stirnfläche des Sperrdornes 28 gelegt wird. Der Treibstangenrückzugshebel 10 liegt dann im Wesentlichen lose schwenkbar um das Drehlager 19 im Gehäuse 1. Der Sperrdorn 28 kann in einfacher Weise nachträglich eingesetzt werden, da lediglich die Befestigungsschrauben 31 gelöst werden brauchen und nach Entfernen des Deckels das Elektronikmodul aus der Aufnahmekammer 26 herausgehoben werden braucht, um den Sperrdorn 28 in die Aufnahmekammer 26 einzulegen.

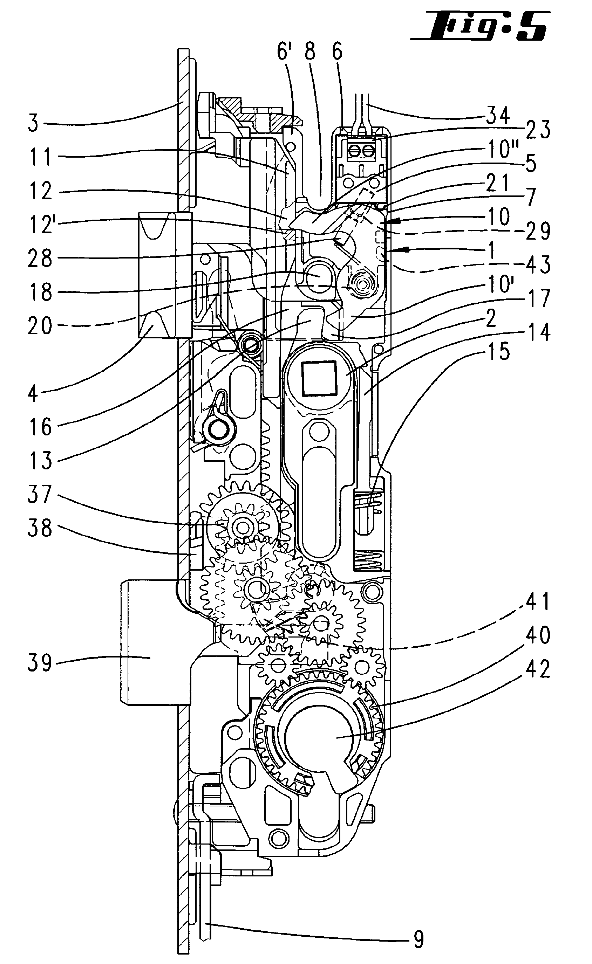

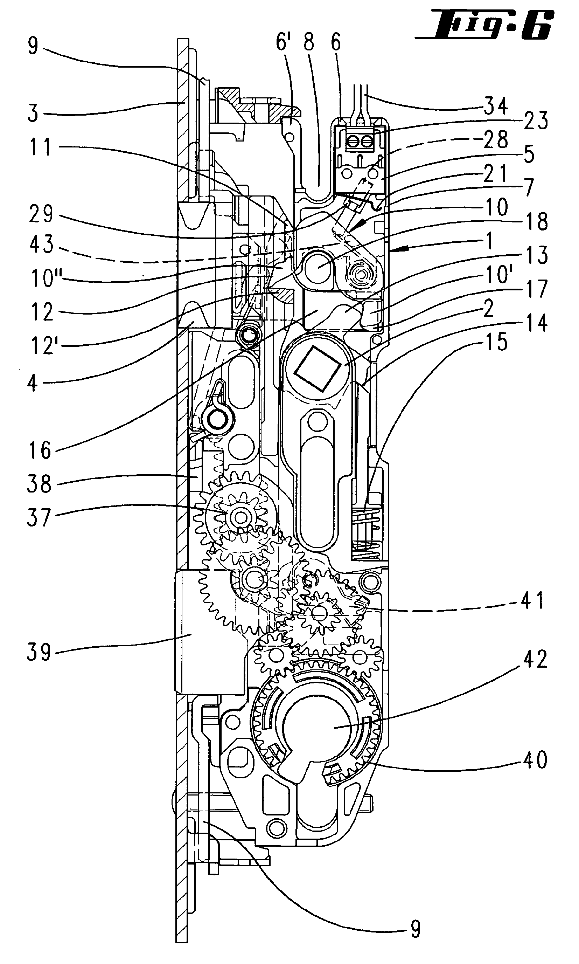

Bei eingesetztem Sperrdorn 28 und außer Wirkung gebrachter Schenkelfeder 20 ergibt sich die in den Figuren 5 - 7 dargestellte Funktionsweise. Ausgehend aus einer Riegelvorschlussstellung, wie sie die Fig. 5 zeigt, wird bei einer Drückerbetätigung zusammen mit der Falle 4 auch der Treibstangenrückzugshebel 10 in die in Fig. 6 dargestellte Stellung verlagert. Der Taster 5 hat seinen elektrischen Zustand gewechselt, da seine Tastfahne 21 nicht mehr vom Schaltnocken 22 beaufschlagt ist. Wird jetzt der Drücker losgelassen, so dreht sich die Drückernuss 2 zwar in ihre Ausgangsstellung zurück. Auch fährt die Falle 4 in ihre Ausgangsstellung. Der Treibstangenrückzugshebel 10 verbleibt jedoch in seiner verschwenkten Stellung, so dass der Taster 5 seinen Zustand nicht wieder ändert. Es wird vielmehr auch nach Loslassen des Drückers vom Schloss das Drückerbetätigungssignal abgegeben. Um dieses Signal zu inaktivieren, müssen die Riegelglieder 39 wieder vorgeschlossen werden. Dies erfolgt üblicherweise mit dem Schließzylinder, der wie oben beschrieben, das Untersetzungsgetriebe antreibt, um die Treibstangenanschlussschieber 11 und 38 zu verschieben. Einhergehend mit dem Verschieben der oberen Treibstange 11 wird der Arm 10" von der Stufe 12' beaufschlagt mit der Folge, dass sich der Treibstangenrückzugshebel 10 bis in die in Fig. 5 dargestellte Ausgangsstellung zurückverlagert. Erst dann schaltet der Taster 5 zufolge des auf die Tastfahne 21 einwirkenden Schaltnockens 22.

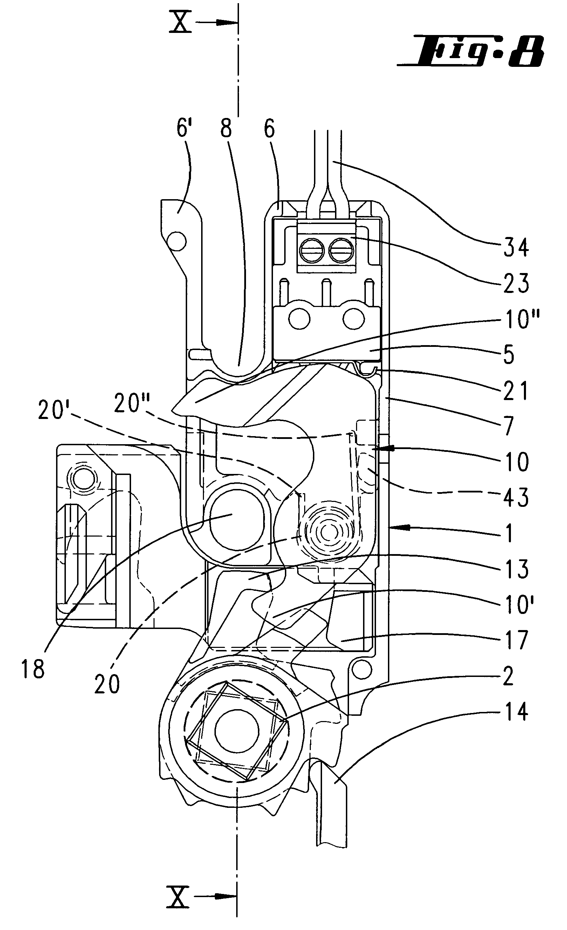

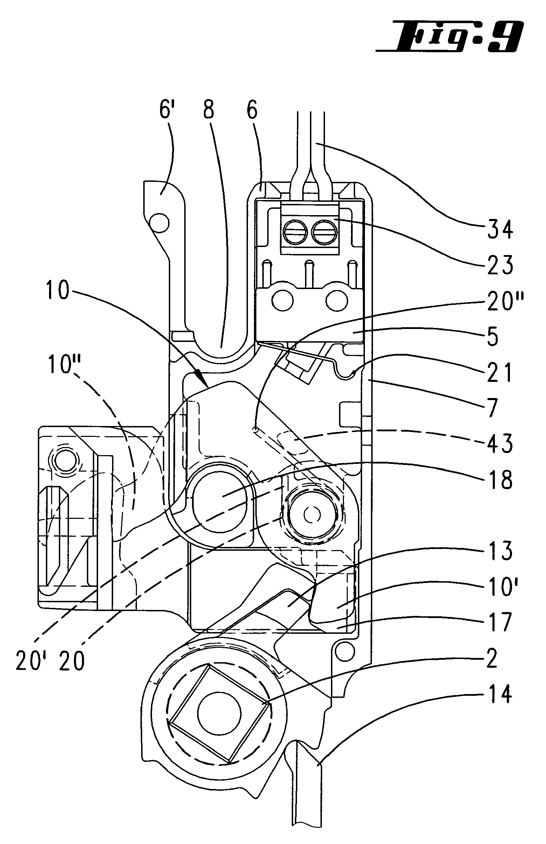

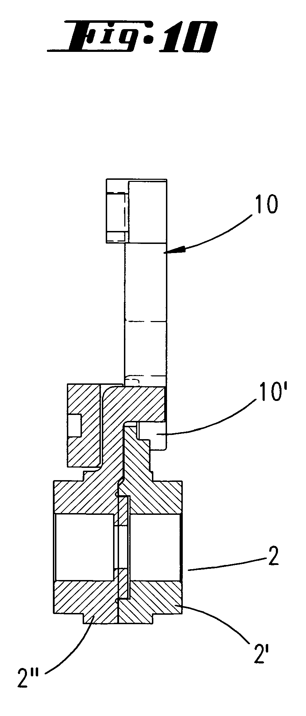

In einer dritten Variante, die in den Figuren 8 - 10 dargestellt ist, ist die Drückernuss 2 zweigeteilt. Sie besteht aus einer ersten Drückernusshälfte 2', die mit einem Innendrücker verbunden ist und aus einer zweiten Drückernusshälfte 2", die mit einem Außendrücker verbindbar ist. Beide Drückernusshälften 2', 2" wirken mit ihrem Arm auf den Mitnahmevorsprung 17 des Fallenschwanzes 16 ein, so dass die Betätigung von sowohl Innendrücker als auch Außendrücker zu einem Rückzug der Falle 4 bzw. zu einem Rückzug des Fallenschlittens 16 führen kann. Lediglich mit der inneren Drückernusshälfte 2' kann der Treibstangenrückzugshebel 10 verlagert werden. Ein Riegelrückschluss, also eine Panikfunktion, ist bei dieser Variante nur mit dieser Drückernuss 2' möglich. Da der Taster nicht unmittelbar die Verlagerung der Drückernuss detektiert, sondern die von innen ausgelöste Panikfunktion, indem er das Verschwenken des Treibstangenrückzugshebels 10 detektiert, führt eine Außendrückerbetätigung nicht zu einem Wechsel des elektrischen Zustandes des Tasters 5. Diese elektrische Zustandsänderung erfolgt nur durch Drehen der inneren Drückernuss 2'.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Schloss mit einer in einem Schlossgehäuse (1) gelagerten und durch Drehen einer Drückernuss (2) von einer Vortrittsstellung vor einem die Brustschmalseite des Schlossgehäuses (1) bildenden Stulp (3) in eine Rückzugsstellung zurückziehbaren Falle (4) und einem elektrischen Sensorelement (5), welches bei einem derartigen Fallenrückzug seinen elektrischen Zustand ändert, wobei das Schlossgehäuse (1) an seiner im eingebauten Zustand nach oben weisenden oberen Schmalseite (6, 6') zwischen Stulp (3) und einer diesem gegenüberliegenden rückwärtigen Schmalseite (7) eine Ausbuchtung (8) aufweist, **dadurch gekennzeichnet, dass** das Sensorelement (5) rückwärtig der Aussparung (8) und oberhalb der Drückernuss (2) angeordnet ist.

2. Schloss nach Anspruch 1 oder insbesondere danach, **dadurch gekennzeichnet, dass** das Sensorelement (5) in einem von einem Fortsatz gebildeten Eckbereich von oberer Schmalseite (6, 6') und rückwärtiger Schmalseite (7) angeordnet ist.

3. Schloss nach einem oder mehreren der vorhergehenden Ansprüchen oder insbesondere danach, **gekennzeichnet durch** einen drückerbetätigbaren Riegel- oder Treibstangenrückzugshebel (10), der eine Tastfahne (21) eines Tasters (5) betätigt.

4. Schloss nach einem oder mehreren der vorhergehenden Ansprüchen oder insbesondere danach, **dadurch gekennzeichnet, dass** das Schloss ein Panikschloss ist, bei dem bei einer Drückerinnenbetätigung zusammen mit der Falle (4) weitere Riegelelemente (39) zurückgezogen werden.

5. Schloss nach einem oder mehreren der vorhergehenden Ansprüchen oder insbesondere danach, **dadurch gekennzeichnet, dass** das Schloss ein Treibstangenschloss ist.

6. Schloss nach einem oder mehreren der vorhergehenden Ansprüchen oder insbesondere danach, **dadurch gekennzeichnet, dass** das Sensorelement ein Taster (5) ist.

7. Schloss nach einem oder mehreren der vorhergehenden Ansprüchen oder insbesondere danach, **dadurch gekennzeichnet, dass** das Sensorelement (5) zusammen mit einem Kabelanschlusselement (23) zum Anschluss eines Kabels (34) auf einer gemeinsamen Platine (24) angeordnet ist.

8. Schloss nach einem oder mehreren der vorhergehenden Ansprüchen oder insbesondere danach, **dadurch gekennzeichnet, dass** die Platine (24) in einer Aufnahmekamner (26) eines Gehäusemoduls (25) einliegt.

9. Schloss nach einem oder mehreren der vorhergehenden Ansprüchen oder insbesondere danach, **dadurch gekennzeichnet, dass** der um einen gehäusefesten Lagerzapfen (19) durch Angriff eines Arms (13) der Drückernuss (2) schwenkbare Riegel- oder Treibstangenrückzugshebel (10) von einer Schenkelfeder (20) in Richtung einer das Sensorelement (5) betätigten Stellung beaufschlagbar ist und der den Riegel- oder Treibstangenrückzugshebel (10) beaufschlagende Arm (20") der Schenkelfeder (20) mittelst eines Sperrelementes außer Wirkung bringbar ist.

10. Schloss nach einem oder mehreren der vorhergehenden Ansprüchen oder insbesondere danach, **dadurch gekennzeichnet, dass** das Sperrelement ein in einer Halterung (29) des Schlossgehäuses (1) einlegbarer Stift (28) ist, vor welchem der Arm (20') der Schenkelfeder (20) in ihrer außer Wirkung gebrachten Stellung liegt.

11. Schloss nach einem oder mehreren der vorhergehenden Ansprüchen oder insbesondere danach, **dadurch gekennzeichnet, dass** das Gehäusemodul (25) mit einem Deckel (30) verschließbar ist, wobei ein oder mehrere Befestigungsschrauben (31) des Deckels (30) Schraubendurchtrittsöffnungen (32) des Tasters durchragen, um den Taster (5) zusammen mit dem über die gemeinsame Platine (24) mit dem Taster verbundenen Anschlusselement (23) in der Gehäuseöffnung (27) zu fixieren.

12. Schloss nach einem oder mehreren der vorhergehenden Ansprüchen oder insbesondere danach, **dadurch gekennzeichnet, dass** das beim Fallenrückzug betätigte Sensorelement (5) erst nach einer Verlagerung ein oder mehrerer Riegelelemente (39) in eine Vorschlussstellung wieder in einen nicht betätigten Zustand zurückverlagert wird.

## Claims

1. Lock comprising a latch (4), which is mounted in a lock housing (1) and can be retracted by rotating a pusher nut (2) from an advanced position, in front of a face plate (3) forming the narrow breast face of the lock housing (1), into a retracted position, and comprising an electrical sensor member (5), the electrical state of which changes during a latch retraction of this type, the lock housing (1) comprising a protrusion (8) on the narrow face (6, 6') thereof, which faces upwards when installed, between the face plate (3) and a rearward narrow face (7) opposite said face plate, **characterised in that** the sensor member (5) is arranged to the rear of the protrusion (8) and above the pusher nut (2).

2. Lock according to or in particular according to claim 1, **characterised in that** the sensor member (5) is arranged in a corner region, formed by a projection, of the upper narrow face (6, 6') and the rearward narrow face (7).

3. Lock according to or in particular according to one or more of the preceding claims, **characterised by** a bolt or drive rod retraction lever (10), which can be actuated by a pusher and actuates a contact lug (21) of a feeler (5).

4. Lock according to or in particular according to one or more of the preceding claims, **characterised in that** the lock is a panic lock, in which further bolt members (39) are retracted together with the latch (4) in the case of a pusher actuation from the inside.

5. Lock according to or in particular according to one or more of the preceding claims, **characterised in that in that** the lock is a drive rod lock.

6. Lock according to or in particular according to one or more of the preceding claims, **characterised in that** the sensor member is a feeler (5).

7. Lock according to or in particular according to one or more of the preceding claims, **characterised in that** the sensor member (5) is arranged on a common circuit board (24) together with a cable connection member (23) for connecting a cable (34).

8. Lock according to or in particular according to one or more of the preceding claims, **characterised in that** the circuit board (24) is positioned inside a receiving chamber (26) of a housing module (25).

9. Lock according to or in particular according to one or more of the preceding claims, **characterised in that** the bolt or drive rod retraction lever (10), which can be pivoted about a journal (19), fixed to the housing, by the application of an arm (13) of the pusher nut (2), can be loaded by a leg spring (20) towards a position actuating the sensor member (5), and the arm (20") of the leg spring (20) which loads the bolt or drive rod lever (10) can be taken out of action by means of a blocking member.

10. Lock according to or in particular according to one or more of the preceding claims, **characterised in that** the blocking member is a pin (28) which can be positioned in a mounting (29) of the lock housing (1) and in front of which the arm (20') of the leg spring (20) is positioned when in the out-of-action position.

11. Lock according to or in particular according to one or more of the preceding claims, **characterised in that** the housing module (25) can be sealed by a lid (30), one or more fixing screws (31) of the lid (30) projecting through screw penetration openings (32) in the feeler so as to fix the feeler (5), together with the connection member (23) connected to the feeler via the common circuit board (24), in the housing opening (27).

12. Lock according to or in particular according to one or more of the preceding claims, **characterised in that** the sensor member (5) which is actuated when the latch is retracted is only displaced back into a non-actuated state again once one or more bolt members (39) have been displaced into a forward locking position.

## Revendications

1. Serrure comprenant un loquet (4) monté dans un boîtier de serrure (1) et qui peut se rétracter en position de retrait par rotation d'un fouillot à poussoir (2) d'une position de pré-actionnement devant un embouti (3) formant le petit côté du boîtier de serrure (1) et un élément détecteur électrique (5), qui, lors d'un tel retrait du fouillot, modifie son état électrique, dans laquelle le boîtier de serrure (1) présente une indentation (8) sur son petit côté supérieur (6, 6') tourné vers le haut à l'état incorporé entre l'embouti (3) et un petit côté (7) arrière opposé à celui-ci, **caractérisée en ce que** l'élément détecteur (5) est aménagé à l'arrière de l'évidement (8) et au-dessus du fouillot à poussoir (2).

2. Serrure selon la revendication 1, **caractérisée en ce que** l'élément détecteur (5) est aménagé dans une zone de coin - formé par un épaulement - du petit côté supérieur (6, 6') et du petit côté arrière (7).

3. Serrure selon une ou plusieurs des revendications précédentes, **caractérisée par** un levier (10) de retrait de verrou ou de bielle motrice qui commande un talon (21) d'un palpeur (5).

4. Serrure selon une ou plusieurs des revendications précédentes, **caractérisée en ce que** la serrure est une serrure coup de poing, dans laquelle, lors d'une commande intérieure du poussoir, d'autres éléments de verrouillage (39) sont rétractés conjointement avec le loquet (4).

5. Serrure selon une ou plusieurs des revendications précédentes, **caractérisée en ce que** la serrure est une serrure à bielle motrice.

6. Serrure selon une ou plusieurs des revendications précédentes, **caractérisée en ce que** l'élément détecteur est un palpeur (5).

7. Serrure selon une ou plusieurs des revendications précédentes, **caractérisée en ce que** l'élément détecteur (5) est aménagé conjointement avec un élément de raccordement de câble (23) pour raccorder un câble (34) sur une platine commune (24).

8. Serrure selon une ou plusieurs des revendications précédentes, **caractérisée en ce que** la platine (24) est logée dans une chambre réceptrice (26) d'un module de boîtier (25).

9. Serrure selon une ou plusieurs des revendications précédentes, **caractérisée en ce que** le levier (10) de retrait de verrou ou de bielle motrice pivotant autour d'un tourillon (19) fixé au boîtier par action d'un bras (13) du fouillot à poussoir (2) peut être sollicité par un ressort spiralé (20) dans la direction d'une position commandée par l'élément détecteur (5) et le bras (20") du ressort spiralé (20) sollicitant le levier (10) de retrait de verrou ou de bielle motrice peut être amené en position inopérante au moyen d'un élément de blocage.

10. Serrure selon une ou plusieurs des revendications précédentes, **caractérisée en ce que** l'élément de blocage est une tige (28) insérable dans une fixation (29) du boîtier de serrure (1), tige par laquelle le bras (20') du ressort spiralé (20) se trouve dans sa position inopérante.

11. Serrure selon une ou plusieurs des revendications précédentes, **caractérisée en ce que** le module de boîtier (25) peut être fermé par un couvercle (30), dans laquelle une ou plusieurs vis de fixation (31) du couvercle (30) passe(nt) à travers des ouvertures (32) de passage de vis du palpeur pour fixer le palpeur (5) conjointement avec l'élément de raccordement (23) connecté au palpeur via la platine commune (24) dans l'ouverture de boîtier (27).

12. Serrure selon une ou plusieurs des revendications précédentes, **caractérisée en ce que** l'élément détecteur (5) commandé lors d'un retrait du loquet n'est à nouveau déplacé à l'état non commandé qu'après un déplacement d'un ou de plusieurs éléments de verrouillage (39) en position de pré-fermeture.
